# EUROPEAN PATENT SPECIFICATION

(11) **EP 3 425 185 B1**
(45) Date of publication and mention of the grant of the patent: **22.04.2020**
(21) Application number: 18181561.4
(22) Date of filing: 04.07.2018
(51) Int. Cl.: F02B 19/10, F02B 19/12, F02D 19/08

(54) **SPARK IGNITION INTERNAL COMBUSTION GAS ENGINE**
OTTOGASMOTOR
MOTEUR À GAZ À COMBUSTION INTERNE ET À ALLUMAGE COMMANDÉ

(30) Priority: 04.07.2017 CZ 20170393
(43) Date of publication of application: 09.01.2019
(73) Proprietor: Ceske vysoke uceni technicke v Praze, Fakulta strojni, Centrum vozidel udrzitelne mobility, 160 00 Praha 6, Dejvice (CZ)
(72) Inventor: Vavra, Jiri, 252 64 Velke Prilepy (CZ); Takats, Michal, 160 00 Praha 6, Bubenec (CZ); Macek, Jan, 149 00 Praha 4, Chodov (CZ); Syrovatka, Zbynek, 251 69 Velke Popovice (CZ)
(74) Representative: Musil, Dobroslav

(56) References cited:
- US-A1- 2003 200 939
- US-A1- 2006 278 195
- US-A1- 2016 265 416
- US-B1- 8 925 518

## Description

### Technical field

A spark ignition internal combustion gas engine, whose fuel system comprises a fuel tank with a gaseous main fuel and a fuel tank with a second gaseous fuel differing from the main fuel, whereby the engine cylinder comprises an ignition chamber, in which is arranged a means for igniting the gas fuel located therein, the ignition chamber being connected via interconnecting holes to the main combustion space, whereby the pure main fuel feed opens into a supply duct in front of a suction valve of the cylinder, where it is mixed with air or with recirculated flue gases, whereby the internal combustion engine is coupled to the engine control unit to monitor the current state of the engine operation and, according to it, to control at least the fuel system, ignition timing system and the engine performance.

### Background art

A spark-ignition engine ignited by a spark, the spark gap of which is located in a non-separated combustion chamber, allows the engine to run with an air/fuel ratio which is close to the stoichiometric ratio. However, significant dilution of the mixture results in a significant reduction in the chemical efficiency of the combustion, an increase in unburnt hydrocarbons in flue gases, great variability of the working cycles, and finally leads to a complete collapse of the combustion process. These circumstances limit the possibility of operating the engine with an extremely lean fuel mixture by an excess-air coefficient of about 1.65.

On the other hand, dilution of the mixture leads to a decrease in the temperature during the high-pressure part of the working cycle with a favourable consequence of a reduction in the content of nitrogen oxides in raw flue gases. Gradual tightening of emission limits, however, requires additional flue-gas treatment.

Patent application CZ305218 B6 is aimed at reducing nitrogen oxide emissions or increasing the engine performance or efficiency, while complying with the nitrogen oxide emission limit by utilizing gaseous fuel mixtures of various compositions. It does not solve the burning of a lean fuel mixture. The non-separated combustion chamber does not allow efficient operation with an extremely lean mixture.

Mixed fuels are also dealt with in US5787864A. In the descriptive part and the justification, the references are based on a legislative basis valid 20 years ago. After the continued tightening of the requirements of environmental legislation, the proposed solution is incapable of meeting the existing legislative requirements.

Document CA2539711A describes a compression-ignition internal combustion engine with direct injection of hydrogen and natural gas into a non-separated combustion space. Using a high compression ratio is assumed, and an extremely high pressure in the fuel line is required to supply the fuel. Combustion of a lean mixture is made possible due to ignition by injecting a pilot dose of diesel fuel. Operation on the stoichiometric mixture is not practically possible.

US2011/0166769 A1 describes a diesel engine arrangement with a supply of gaseous fuel of various compositions to the filling line. Operation requires a continuous supply of diesel fuel.

WO2008/150901A1 describes the possibilities of combustion of a mixture of ammonia and a catalyst fuel in a non-separated combustion space of the engine. Apparently, the goal is to minimize CO₂ emissions using ammonia as a fuel.

Document US20070236122A1 discloses a solution with a non-flushed ignition chamber, which is connected to the main combustion space, with a spark gap of a spark plug being arranged in a known manner therein. This reduces inter-cycle variability of cycles, but the impossibility of operating on an extremely diluted mixture remains.

Significant widening between flammability limits and increased engine efficiency is made possible by feeding a fuel exhibiting a high combustion velocity into the ignition chamber. WO9602742A1 discloses an ignition device in which hydrogen is fed to the ignition chamber. This device requires accurate timing of the supply of hydrogen to the pre-combustion chamber and therefore uses an actively controlled valve for timing the hydrogen injection into the chamber. The valve closure element must be functional, although it is exposed to maximum pressure and maximum local temperature of the piston engine working cycle. Dimensionally, the valve should allow installation, including the hydrogen supply, into the bore for the standard spark plug. Meeting these requirements is very difficult due to the limitations of the current technological possibilities and the cost of such a component is extremely high.

The invention according to WO9602742A is intended only for the combustion of a lean mixture. This leads either to a significant limitation of achievable performance or to the requirement of extremely high overcharging, probably by means of a multi-stage charging group.

The invention according to WO9602742A aims to minimize the consumption of a highly combustible fuel (hydrogen). This is an advantage if we consider possible problems with hydrogen supply (in-vehicle storage) or problems with stationary spark-ignition engines, which also include a device for hydrogen production from thermal decomposition of water or the hydrocarbon fuel reformation at the engine installation site, as described in WO2014053167A1. At the same time, however, it does not contribute to the ongoing process of introducing renewable fuels, because almost all the power supplied to the engine is covered with fossil fuels (methanol, gasoline). The option of using an alternative (renewable) main fuel is not mentioned.

Ignition of a lean mixture is also solved by US20030200939A1. The apparatus comprises a tank with the main fuel, which is natural gas in the exemplary embodiment. This fuel is fed in a known manner by one branch into the main combustion chamber, and by a second branch to a reformer in which it is enriched with hydrogen. The fuel thus reformed is delivered to the combustion prechamber where it is ignited by the spark plug. The flame of the burning ignition fuel will spread through the holes of the prechamber to the main combustion chamber in which it ignites the lean mixture of the main fuel and the air.

US2016/0265416A1 discloses a spark ignition internal combustion gas engine according to the preamble of independent claim 1.

Nevertheless, the operation of an internal combustion engine in a wide range of excess air and load does not allow the use of pure hydrogen as described above. At low load, the engine operation with lean mixtures is desirable, as it reduces the maximum combustion temperature and consequently decreases the emissions of nitrogen oxides. Moreover, thanks to the favourable Poisson constant of the cylinder filling and the minimization of losses caused by cooling, the thermal efficiency of the engine increases.

However, the internal combustion engine is also operated at high loads. The above-mentioned devices of the background art do not allow this. In this mode, it is advisable to maintain a stoichiometric mixture in the engine, especially in terms of synergy with the three-way catalytic converter which additionally eliminates pollutants in flue gases. In a full-load mode, the stoichiometric mixing ratio flushing the chamber with hydrogen alone leads to pre-ignition because of the high reactivity and high burning velocity of hydrogen.

The aim of the invention is to remove or at least reduce the drawbacks of the background art, especially in terms of increasing the thermal efficiency of the engine and minimizing the in-process variability of the engine operating cycles, while at the same time achieving a more favourable composition of the raw flue gases.

### Principle of the invention

The aim of the invention is achieved by a spark ignition internal combustion gas engine according to independent claim 1.

The mixing ratio of the gases constituting the auxiliary fuel fed to the ignition chamber is controlled by the engine control unit according to the operating mode of the engine.

The ignition chamber with an auxiliary fuel supply thus allows the engine to operate with extremely diluted mixtures with a value of an excess-air coefficient greater than 2. If the engine runs at an extremely low load, the cylinder is filled with an extremely lean mixture and, for its desired ignition, sets the mixing ratio of the secondary fuel supplied to the ignition chamber at 100%pure hydrogen. On the contrary, in a full load mode, the ignition chamber is flushed with gaseous fuel with the highest possible resistance to self-ignition, namely with the main fuel, which is pure natural gas.

A pressure regulator is arranged in the auxiliary fuel supply pipe to the engine between the mixer and the inlet into the ignition chamber, the pressure regulator being coupled to the engine control unit.

An ignition means is arranged in the ignition chamber, which is preferably a high voltage spark plug or a laser.

### Description of drawings

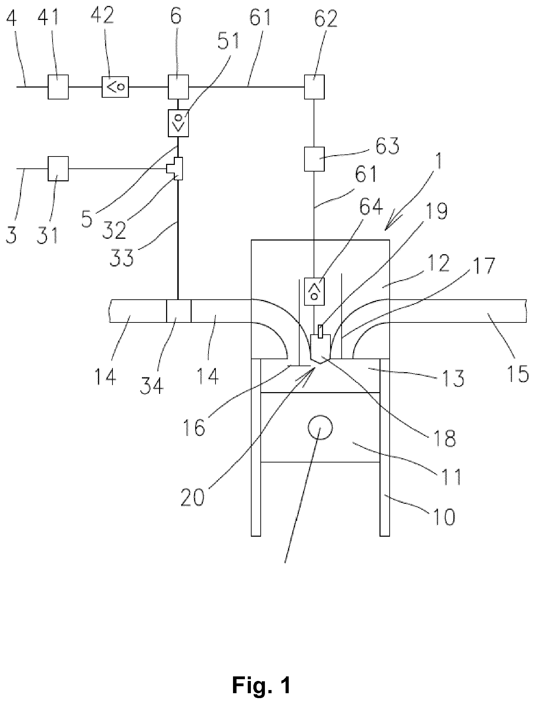

The solution according to the invention is shown in Fig. 1 by a schematic view of a cylinder with a fuel system of a spark ignition internal combustion gas engine.

### Examples of embodiment

Fig. 1 schematically represents a cylinder unit of a gas fueled internal combustion engine **1** which comprises a cylinder **10** in which a piston **11** is mounted and the cylinder **10** is terminated by a head **12.** The main combustion space **13** is provided between the piston and the head. Connected to the main combustion space **13** via a suction valve **16** is a supply duct **14** of the mixture of air and the main fuel and, if appropriate, of the recirculated exhaust gases, and via an exhaust valve **17,** an exhaust duct **15** is connected to it. In the region of the cylinder axis **10,** an ignition chamber **18** is connected to the main combustion space **13** with a spark gap **18** of an unillustrated high-voltage spark plug **19.** Another means, such as a laser ignition device, can also be used to ignite the mixture. The ignition chamber **18** is connected to the main combustion space **13** via interconnecting holes **20.**

The internal combustion engine **1** is connected to two unillustrated tanks with different gaseous fuels. The main fuel is a fuel with a high auto-ignition resistance. In the exemplary embodiment, the main fuel is natural gas with a high proportion of methane, which satisfies the requirement for high auto-ignition resistance best of the gaseous hydrocarbons. The main fuel is fed through the main fuel supply **3.**

By a second supply pipe **4,** the combustion engine is connected to a second fuel tank (not shown), which in the exemplary embodiment is hydrogen characterized by a high combustion velocity.

At the outlets of the two fuel tanks, pressure regulators **31, 41** are included in the ducts **3, 4.**

Downstream of the pressure regulator **31,** the main fuel supply pipe **3** enters the first throat of a three-way connector **32,** the second throat of which is connected to a pipe **33,** which opens into the main fuel supply pipe **14** upstream of the suction valve **16** in an exemplary embodiment by means of a device for mixing air and the main fuel consisting of a medium pressure injector **34.** The third throat of the three-way connector **32** is by the interconnecting pipe introduced into a mixer **6** into which also the second fuel supply pipe **4** opens.

By the mixer **6,** the main fuel supply **3** is connected to the second fuel supply **4.** The fuel downstream of the mixer **6** is either pure hydrogen or a mixture of pure hydrogen and main fuel, or it is pure main fuel, and is further referred to as an auxiliary fuel. In the second fuel supply **4,** a check valve **42** is inserted before the mixer **6.** A check valve **51** is provided between the third throat of the three-way connector **32** and the mixer **6** to prevent the second fuel from entering the main fuel supply pipe **14.**

A pressure regulator **62,** a surge chamber **63,** and a check valve **64** are arranged in a series in the outlet pipe **61** of the auxiliary fuel from the mixer **6,** which is the second fuel or a mixture of the second and main fuel or pure main fuel. Downstream of the check valve **64,** the secondary fuel pipe **61,** delivering a mixture of the second and main fuel, is coupled to the ignition chamber **18.** The pressure regulator **62** is coupled to the engine control unit which by means of the pressure regulator **62** controls the amount of secondary fuel supplied to the ignition chamber **18** according to the engine operating mode.

The engine fuel and ignition system is coupled to a control unit (not shown) which, according to the requirements of the engine, controls at least the proportion of the main and second fuel components in the auxiliary fuel, measuring the main fuel into the supply duct **14** and the auxiliary fuel to the ignition chamber **18,** the instant of ignition of the fuel supplied to the ignition chamber, as well as the engine performance by an unillustrated flow control element.

During the operation of the engine during the compression stroke near the upper dead center, ignition of the well-ignited mixture occurs in the ignition chamber **18** followed by the subsequent flow of the charge of the chamber via the interconnecting holes **20** into the main combustion space **13.** This results in the multi-point high intensity ignition of the main fuel in the main combustion space **13,** which exceeds many times the spark plug ignition energy or the ignition energy of a similar known source.

The mixing ratio of the main and second fuels in the secondary gaseous fuel is controlled by the control unit in the range from zero to 100% of one of the gases.

The ignition chamber **18** with the auxiliary fuel supply thus allows the engine to operate on extremely diluted mixtures with a value of the excess-air coefficient greater than 2. High dilution of the mixture results in a lower content of nitrogen oxides in the raw flue gases. If the engine is running at an extremely low load, the cylinder is filled with an extremely lean mixture and, for its desired ignition, sets the mixing ratio of the auxiliary fuel supplied to the ignition chamber **18** at 100%pure hydrogen, i.e. of the second fuel. On the contrary, in a full load mode, it is advisable to flush the ignition chamber **18** with a gaseous fuel having the highest possible auto-ignition resistance, i.e. the main fuel, which is pure natural gas.

The solution of the gas-fueled internal combustion engine according to the invention is usable both in mobile and stationary applications. The benefit of this consists in increasing the thermal efficiency of the internal combustion engine, minimizing the inter-cycle variability of the engine parameters and achieving a more favourable composition of the flue gases compared to the arrangement of gas-fueled internal combustion engines according to the background art.

### List of references

1 spark ignition internal combustion engine
10 cylinder of the internal combustion engine
11 piston
12 cylinder head
13 main combustion space
14 supply pipe of the mixture of the main fuel and air
15 exhaust valve
16 suction valve
17 exhaust valve
18 ignition chamber
19 spark plug
20 interconnecting holes (of the main combustion space and the ignition chamber)
3 main fuel supply
31 pressure regulator (in the main fuel branch pipe)
32 three way connector
33 main fuel supply pipe
34 device for mixing air and main fuel
4 second fuel supply
41 first pressure regulator (in the second fuel branch pipe)
42 check valve (in the second fuel branch pipe)
5 interconnecting pipes of both fuels
51 check valve (in the interconnecting fuel pipes)
6 mixer of main and auxiliary fuels
61 auxiliary fuel supply pipe
62 the pressure regulator (in the auxiliary fuel branch pipe)
63 surge chamber (in the auxiliary fuel branch pipe)
64 check valve (before the inlet of the auxiliary fuel to the ignition chamber)

## Claims

1. A spark ignition internal combustion gas engine (1), including a fuel system which comprises a first fuel tank with main gaseous fuel and a second fuel tank with second gaseous fuel differing from the main fuel, the engine further including an engine cylinder (10) which comprises a main combustion space (13) and an ignition chamber (18), in which is arranged a means for igniting the gas fuel located therein, whereby the ignition chamber (18) is connected via interconnecting holes (20) to the main combustion space (13), whereby a pure main fuel feed from the first fuel tank opens into a supply duct (14) in front of a suction valve (16) of the cylinder (10), whereby the internal combustion engine is coupled to an engine control unit to monitor the current state of the engine operation and, according to it, to control at least the fuel system, an ignition timing system and the engine performance, whereby the fuel system comprises a mixer (6) of the gaseous fuels, which is connected to a supply from the first fuel tank with the main gaseous fuel (3) and to a supply from the second fuel tank with the second gaseous fuel (4), whereby a means for setting the mutual ratio of mixing the main fuel and the second fuel in the mixer (6) is coupled to the engine control unit, whereby an auxiliary fuel supply pipe (61), extending from the mixer (6) and leading to the engine (1), opens into the ignition chamber (18), **characterized in that** the resulting mixing ratio of the main and second fuels in the auxiliary fuel supply pipe (61) downstream of the mixer (6) is adjustable in the range between 0 and 100% of one of the gases.

2. The spark ignition internal combustion gas engine (1) according to claim 1, **characterized in that** the mixing ratio of the gases constituting the auxiliary fuel fed to the ignition chamber (18) is controlled by the engine control unit according to the operating mode of the engine.

3. The spark ignition internal combustion gas engine (1) according to any of the preceding claims, **characterized in that** in the auxiliary fuel supply pipe (61) to the engine, a pressure regulator (62) is arranged between the mixer (6) and the inlet into the ignition chamber (18), the pressure regulator (62) being coupled to the engine control unit.

4. The spark ignition internal combustion gas engine (1) according to any of claims 1 to 3, **characterized in that** the ignition means is a high voltage spark plug (19).

5. The spark ignition internal combustion gas engine (1) according to any of claims 1 to 3, **characterized in that** the ignition means is a laser.

6. The spark ignition internal combustion gas engine (1) according to any of the preceding claims, **characterized in that** the engine control unit (1) is coupled to a device for mixing air and the main fuel, consisting of a medium-pressure main fuel injector (34) arranged in the supply duct (14) of the mixture leading to the main combustion space (13).

7. The spark ignition internal combustion gas engine (1) according to any of claims 1 to 5, **characterized in that** the engine control unit (1) is coupled to a device for mixing air and the main fuel, consisting of a low-pressure mixer of the main fuel with the air, which is arranged in the supply duct (14) of the mixture leading to the main combustion space (13).

## Patentansprüche

1. Gaszündungsverbrennungsmotor (1), der ein Kraftstoffsystem aufweist, das einen ersten Kraftstofftank mit dem Hauptgaskraftstoff und einen zweiten Kraftstofftank mit einem zweiten Gaskraftstoff aufweist, der sich von dem Hauptkraftstoff abweicht, wobei dieser Motor ferner einen Zylinder (10) des Motors aufweist, der einen Hauptverbrennungsraum (13) und eine Zündkammer (18) aufweist, in der ein Mittel zur Zündung von dem sich darin befindenden Gaskraftstoff angeordnet ist, wobei die Zündkammer (18) durch die Verkopplungsöffnungen (20) mit dem Hauptverbrennungsraum (13) verbunden ist, wobei die Zufuhr eines reinen Hauptkraftstoffes aus dem ersten Kraftstofftank in den Zuführungskanal (14) vor das Saugventil (16) des Zylinders (10) ausgemündet ist, wobei der Verbrennungsmotor mit einer Steuereinheit des Motors zur Verfolgung eines aktuellen Standes des Motorgangs und in der Abhängigkeit davon zur Steuerung von mindestens Kraftstoffsystem, System des Timings der Zündung und Leistung des Motors verkoppelt ist, wobei das Kraftstoffsystem einen Mischer (6) von gasförmigen Kraftstoffen aufweist, der an Zufuhr des Hauptgaskraftstoffes aus dem ersten Kraftstofftank mit dem Hauptgaskraftstoff und an Zufuhr des zweiten Gaskraftstoffes aus dem zweiten Kraftstofftank angeschlossen ist, wobei das Mittel zur Einstellung eines gegenseitigen Mischverhältnisses des Hauptkraftstoffes und des zweiten Kraftstoffes im Mischer (6) mit einer Steuereinheit des Motors verkoppelt ist, wobei die Rohrleitung (61) der Zufuhr des Nebenkraftstoffes, die aus dem Mischer (6) austritt und in Motor (1) führt, in eine Zündkammer (18) mündet, **dadurch gekennzeichnet, dass** das resultierende Mischverhältnis des Hauptkraftstoffes und des zweiten Kraftstoffes in der Rohrleitung (61) der Zufuhr des Nebenkraftstoffes hinter dem Mischer (6) im Bereich zwischen 0 bis 100% von einem der Gase einstellbar ist.

2. Gaszündungsverbrennungsmotor (1) nach dem Anspruch 1, **dadurch gekennzeichnet, dass** das Mischverhältnis der Gase, die einen Nebenkraftstoff bilden, der in eine Zündkammer (18) zugeführt wird, durch die Steuereinheit in der Abhängigkeit vom Regime des Motorbetriebes gesteuert wird.

3. Gaszündungsverbrennungsmotor (1) nach einem der vorangehenden Ansprüche, **dadurch gekennzeichnet, dass** in der Rohrleitung (61) der Zufuhr des Nebenkraftstoffes in Motor zwischen dem Mischer (6) und dem Eingang in die Zündkammer (18) ein Druckregler (62) eingeordnet ist, der mit einer Steuereinheit des Motors verkoppelt ist.

4. Gaszündungsverbrennungsmotor (1) nach dem Anspruch 4, **dadurch gekennzeichnet, dass** das Zündmittel eine Hochspannungszündkerze (19) ist.

5. Gaszündungsverbrennungsmotor (1) nach dem Anspruch 4, **dadurch gekennzeichnet, dass** das Zündmittel ein Laser ist.

6. Gaszündungsverbrennungsmotor (1) nach einem der vorangehenden Ansprüche, **dadurch gekennzeichnet, dass** mit der Steuereinheit des Motors (1) eine Einrichtung zum Luft- und Hauptkraftstoffmischen verkoppelt ist, die durch einen Mitteldruckeinspritzer (34) des Hauptkraftstoffes gebildet wird, die in der Zuleitung (14) der Mischung in den Hauptverbrennungsraum (13) angeordnet ist.

7. Gaszündungsverbrennungsmotor (1) nach einem der Ansprüche 1 bis 6, **dadurch gekennzeichnet, dass** mit der Steuereinheit des Motors (1) eine Einrichtung zum Luft- und Hauptkraftstoffmischen verkoppelt ist, die durch einen Niederdruckeinspritzer (34) des Hauptkraftstoffes mit Luft gebildet wird, die in der Zuleitung (14) der Mischung in den Hauptverbrennungsraum (13) angeordnet ist.

## Revendications

1. Moteur à gaz à combustion interne à allumages par bougies (1) comprenant un système du carburant qui comprend un premier réservoir du carburant avec un carburant principal gazeux et un deuxième réservoir du carburant avec un deuxième carburant gazeux différent du carburant principal, tandis que ce moteur comprend en outre un cylindre (10) du moteur qui comprend une chambre de combustion principale (13) et une chambre d'allumage (18) dans laquelle les moyens sont prévus pour allumer le carburant gazeux qui y est contenu, tandis que la chambre d'allumage (18) est reliée à la chambre de combustion principale (13) par les ouvertures de communication (20), tandis que l'alimentation en carburant principal propre du premier réservoir du carburant débouche au canal d'amenée (14) devant la soupape d'aspiration (16) du cylindre (10), tandis que le moteur à combustion interne est couplé à l'unité de commande du moteur pour surveiller l'état actuel du fonctionnement du moteur et, en fonction de celui-ci, pour contrôler au moins le système du carburant, le système du calage de l'allumage et la puissance du moteur, tandis que le système du carburant comprend un mélangeur (6) des carburants gazeux connecté à l'alimentation principale en gaz combustible du premier réservoir du carburant principal et à la seconde alimentation en gaz combustible du deuxième réservoir du carburant, tandis que le dispositif de réglage du rapport du mélange du carburant principal et du deuxième carburant dans le mélangeur (6) est couplé à l'unité de commande du moteur, tandis que la conduite (61) d'alimentation en carburant auxiliaire qui sort du mélangeur (6) et qui mène au moteur (1) débouche dans la chambre d'allumage (18), **caractérisé en ce que** le rapport du mélange résultant du carburant principal et du deuxième carburant dans la conduite d'alimentation (61) en carburant secondaire du mélangeur (6) est réglable dans l'étendue de 0 à 100% de l'un des gaz.

2. Moteur à gaz à combustion interne à allumages par bougies (1) selon la revendication 1, **caractérisé en ce que** le rapport du mélange des gaz combustibles secondaires introduits dans la chambre d'allumage (18) est commandé par l'unité de commande du moteur en fonction du mode du fonctionnement du moteur.

3. Moteur à gaz à combustion interne à allumages par bougies (1) selon l'une quelconque des revendications précédentes, **caractérisé en ce qu'**un régulateur de pression (62) couplé à l'unité de commande du moteur est situé dans la conduite (61) d'alimentation en carburant secondaire dans le moteur entre le mélangeur (6) et l'entrée dans la chambre d'allumage (18).

4. Moteur à gaz à combustion interne à allumages par bougies (1) selon la revendication 4, **caractérisé en ce que** le moyen d'allumage est une bougie d'allumage haute tension (19).

5. Moteur à gaz à combustion interne à allumages par bougies (1) selon la revendication 4, **caractérisé en ce que** le moyen d'allumage est un laser.

6. Moteur à gaz à combustion interne à allumages par bougies (1) selon l'une quelconque des revendications précédentes, **caractérisé en ce qu'**un dispositif du mélange de l'air et du carburant principal formé d'un injecteur du carburant principal à moyenne pression (34) disposé dans la conduite d'alimentation (14) est couplé à l'unité de commande du moteur (1) dans la chambre de combustion principale (13).

7. Moteur à gaz à combustion interne à allumages par bougies (1) selon l'une quelconque des revendications 1 à 6, **caractérisé en ce qu'**un dispositif du mélange de l'air et du carburant principal constitué d'un mélangeur principal de l'air et du carburant basse pression disposé dans la conduite d'alimentation (14) du mélange dans la chambre de combustion principale (13) est couplé à l'unité de commande du moteur (1).
